# EUROPEAN PATENT APPLICATION

(11) **EP 3 009 213 A1**
(43) Date of publication of application: **20.04.2016**
(21) Application number: 14382405.0
(22) Date of filing: 17.10.2014
(51) Int. Cl.: B23B 29/034, F16H 55/18

(54) **Boring and facing head with internal tandem drive**

(71) Applicant: Bostek Innovation S.L.U., 20159 Asteasu (Gipuzkoa) (ES)
(72) Inventor: Dravasa Gurruchaga, Juan José, 20159 Asteasu-Gipuzkoa (ES); Garcia Calderon, Emilio, 20159 Asteasu-Gipuzkoa (ES)
(74) Representative: Stiebe, Lars Magnus

(57) **Abstract**

The boring and facing head comprises a tool holder (100) with a carriage (102) to displace a tool (103) radially, and a drive shaft (1) with a first gear (2) to rotate the tool holder (100) around its rotation axis (101), and with second gear (3) coupled to the carriage (102) by means of a drive chain including a differential (4).

The head also comprises a motor (200) arranged to act on the differential (4) to generate a difference in the rotation speed between an input shaft (41) and an output shaft (42), to displace the carriage (102) radially.

The drive chain comprises a third gear (5) with two toothed parts (51, 52), angularly displaced from one another, to reduce the spaces in the drive chain.

The invention also relates to a boring machine and a method for manufacturing the head.

## Description

### Field of the invention

The invention is encompassed within the field of machine tools, and more specifically, within the field of boring and facing heads.

### Background of the invention

The use of machine tools to carry out the boring and facing of objects is well known, such as, for example, boring machines provided with what is commonly known as a boring and facing head, a head that comprises an element holding a boring and facing tool or blade that rotates around a rotation axis to carry out the boring and facing operation. It is usually desirable to have the possibility of displacing the tool in a radial direction, perpendicular to said rotation axis.

US-A-4489629 describes an example of a boring and facing head with the possibility of the radial displacement of the tool by means of an angled radial extension.

Another example of a machine that allows the displacement of a tool in a radial direction with respect to a rotation axis of the tool holder is described and illustrated in GB-A-729098. A drive shaft rotates the tool holder around the rotation axis, which matches the longitudinal axis of the drive shaft. The tool is mounted on a carriage that can be displaced radially in the tool holder, in a direction perpendicular to the rotation axis. On the other hand, the drive shaft also actuates a double differential that comprises a first gear attached to the drive shaft that acts on bevel gears, which in turn displace, in the inverse direction, a second gear which in turn acts on other bevel gears that displace a third gear in the same direction of rotation than that of the drive shaft. The third gear is coupled to a last bevel gear that forms part of a threaded spindle, which rotation around its longitudinal axis produces the displacement of the carriage in the radial direction. When the drive shaft rotates, so does the tool holder, and with it, the last bevel gear, with which the last bevel gear and the third gear rotate at the same time and in the same direction. The machine also comprises a hand wheel 26 that acts on one of the differentials to modify the ratio between the input speed and output speed to generate the movement of the carriage with the tool.

This machine exhibits the inconvenience that it uses a double differential, and therefore, there are many gears between the drive shaft, namely, the input shaft, and the carriage, which could lead to problems of inaccuracy. In order for the gears to operate and to be easy to produce and mount, they need a space among the engaging teeth.

### Description of the invention

A first aspect of the invention relates to a boring and facing head, which comprises:
a drive shaft (coupleable to, for example, the rod of a ram of a boring machine); and
a tool holder arranged to rotate around a rotation axis, the tool holder comprising a carriage configured to hold a tool, such as a blade, said carriage being displaceable radially in a perpendicular direction to said rotation axis, to displace the tool (103) radially in the working plane.

The drive shaft comprises, in an attached or fixed manner to said shaft, a first gear arranged to rotate the tool holder around the rotation axis whenever the drive shaft rotates.

The drive shaft also comprises, in an attached or fixed manner to said shaft, a second gear coupled to the carriage through a motion drive chain, which includes a differential, preferably just one, with an input shaft and an output shaft.

On the other hand, the head also comprises a motor arranged to act on the differential to generate a difference in the rotation speed between the input shaft and the output shaft, or to modify the ratio between the rotation speeds of the input shaft and the output shaft in order to displace the carriage radially.

The drive chain comprises a third gear, which comprises a first toothed part and a second toothed part arranged on the same rotation axis, near each other (for example, one of the parts being connected to the other), said first toothed part being angularly displaced with respect to said second toothed part, such that the teeth of one of said parts are slightly displaced with respect to the teeth of the other of said parts, in the direction of rotation.

These two toothed parts, which can exhibit toothed sets with identical or substantially identical profiles, can be arranged such that when engaging with another toothed gear, for example, with the second gear, a tooth of the first part and a tooth of the second part can meet between a pair of teeth of the other toothed gear such that, due to the angular displacement, the tooth of the first part can abut with one of the teeth of said pair of teeth, and the tooth of the second part can abut with another of the teeth of said pair of teeth. Thus, the spaces and tolerances within the system are reduced. When mounting the drive chain, the two toothed parts can be angularly movable relative to each other, and when the drive chain is mounted, they are angularly displaceable together until each of them abuts with a tooth corresponding to two adjacent teeth of the gear with which the third gear engages, which is when said angular displacement is blocked, for example, by means of a pin, screws, nuts or any other appropriate system. The foregoing, and especially in combination with the use of a single differential in the drive chain between the drive shaft and the carriage, can serve to increase the precision and reduce the spaces and tolerances, which is crucial in this type of machines.

In some embodiments of the invention, the third gear can be a segmented gear, such as a straight, segmented gear that can comprise two pieces obtained separately or obtained from a piece that has been segmented. The third gear comprises said first toothed part and said second toothed part, locked together, with said first toothed part being angularly displaced with respect to the second toothed part with an angle smaller than the angle between two consecutive teeth. In general, the angular displacement is a fraction of the angle corresponding to 360 degrees divided by the number of teeth of each toothed part, for example, a tenth, a twentieth or a hundredth part of said angle. That is to say, two pieces with substantially identical toothed sets, at least with respect to the profile of the teeth, are intended to be arranged slightly displaced in the angular direction, namely, in the direction of rotation, in order for the third gear to abut with the front and rear teeth of the pair of teeth of the gear with which it engages, such as the second gear. Thus, the spaces in the system and the tolerances of the machine can be reduced.

In some embodiments of the invention, the first toothed part and the second toothed part can be arranged such that the angular displacement between them can be adjusted in order to adapt according to the wear of the gears produced with the use of the head over the years.

In some embodiments of the invention, the differential can comprise a differential support wherein two differential gears are housed, by means of which the input shaft (41) is coupled to the output shaft, such that the input shaft and the output shaft rotate in opposite directions. The motor can be coupled to said differential support, for example by means of a threaded shaft or endless screw that engages with a crown in the differential support, such that the motor can rotate the differential support to produce or modify the difference in the rotation speed between the input shaft and the output shaft. Thus, by means of the motor, for example, a servomotor, the radial displacement of the carriage holding the tool can be regulated, which can have a speed proportional to the difference in the rotation speed between the input shaft and the output shaft. The differential gears can be, for example, bevel gears that can both engage with a bevel gear of the input shaft and with a bevel gear of the output shaft. That is to say, this would be a basically conventional differential configuration with respect to these bevel gears.

In some embodiments of the invention, the third gear can be attached or affixed to the input shaft such that the rotation of the third gear can rotate said input shaft; for example, the third shaft can be mounted directly on the input shaft.

In some embodiments of the invention, the second gear can engage with the third gear, such that the drive shaft is arranged to rotate said input shaft directly, by means of said second gear and said third gear. The foregoing, added to the use of the segmented gear for the third gear, and to the use of a single differential, implies a short drive chain with few spaces.

In some embodiments of the invention, the third gear can be configured such that in a certain rotation position, a tooth of the first toothed part of said third gear and a tooth of the second toothed part of said third gear are located between two adjacent teeth of said second gear, said tooth of the first toothed part abutting with one of said two teeth of the second gear, and said tooth of the second toothed part abutting with the other of said two teeth of the second gear. Thus, the spaces in the drive chain are minimized.

In some embodiments of the invention, the first gear can engage with a gear or crown joined together with the tool holder, for example by means of screws, such that the rotation of the drive shaft rotates the tool around the rotation axis.

In some embodiments of the invention, the output shaft can engage with a threaded spindle to which the carriage is coupled, such that the rotation of the spindle around a longitudinal axis of the spindle generates a displacement, in the radial direction, of the carriage. This coupling can be carried out, for example, with two bevel gears, one in the output shaft of the differential and the other in the spindle, and the system can be configured such that when the motor is not acting on the differential, these two bevel gears rotate with the same speed, with which the output shaft will not rotate the spindle, due to which the carriage will not move. Whenever the motor acts on the differential, modifying the ratio between the rotation speed of the input shaft and the rotation speed of the output shaft, the speed ratio between these two bevel gears is modified, with which the spindle rotates around its longitudinal axis, displacing the carriage, and with the carriage, the tool, in the radial direction.

In some embodiments of the invention, the first gear can be related to the tool holder and the second gear can be related to the carriage, such that when there is no difference in the rotation speed between the input shaft and the output shaft (or when the ratio between these two speeds is a predetermined ratio) the carriage is not displaced radially, and when there is a difference in the rotation speed between the input shaft and the output shaft (or when the ratio between these speeds is no longer the predetermined ratio) the carriage is displaced radially depending on the ratio between the rotation speed of the input shaft and the rotation speed of the output shaft

In some embodiments of the invention, the tool holder can also comprise a counterweight arranged to move radially in a synchronized manner with the carriage.

Another aspect of the invention relates to a boring machine, which comprises a ram with a rod, the rod being attached or coupled to the drive shaft of a head such as the one described above, such that the rod can rotate the drive shaft.

Another aspect of the invention relates to a method of manufacturing or mounting of a head such as the one described above. The method includes the steps of:
- mounting the third gear such that it engages with the second gear, such that a tooth of the first toothed part of the third gear and a tooth of the second toothed part of the third gear are located between two adjacent teeth of the second gear;
- displacing the first toothed part and the second toothed part angularly together, until the tooth of the first toothed part abuts with one of the two adjacent teeth of the second gear, and until the tooth of the second toothed part abuts with the other of the two adjacent teeth of the second gear; and
- locking the first toothed part and the second toothed part together, in order to maintain the angular displacement selected between the first toothed part and the second toothed part. This way, the spaces in the drive chain are minimized.

### Brief description of the figures

In order to supplement the description and with the purpose of facilitating a better comprehension of the characteristics of the invention in accordance with an example of a practical embodiment thereof, a set of figures representing the following in an illustrative rather than limiting manner is attached as an integral part of the description:
Figure 1 is a perspective view of the exterior of a head according to a potential embodiment of the invention.
Figure 2 is an elevational sectional view of said head.
Figure 3 is a perspective sectional view of said head, with enlarged views of two areas of the view.
Figure 4 is a perspective sectional view of said head, with the section plane somewhat displaced with respect to figure 3, and with an enlarged view of an area of the view.
Figure 5 is a perspective view of a horizontal section of the head, with an enlarged view of an area of the view.
Figure 6 is a vertical sectional view perpendicular to the rotation axis, with an enlarged area of one of the views.
Figures 7A and 7B are schematic views of the engagement between the second gear and the third gear.

### Description of an embodiment of the invention

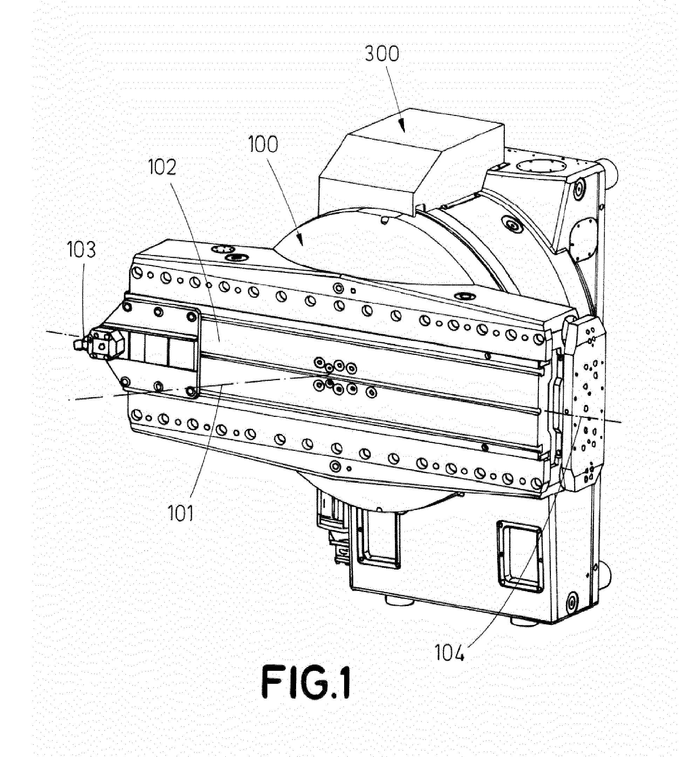

Figure 1 illustrates a boring and facing head schematically according to an embodiment of the invention, which comprises a body or casing 300 that can be coupled to a boring machine, and a tool holder 100 that can rotate around a rotation axis 101. The tool holder includes a carriage 102 that can be displaced in a linear manner according to an axis 104 to displace a tool 103 in a radial manner with respect to the rotation axis 101. Thus, the tool can rotate around the rotation axis 101 and be displaced radially according to the axis 104.

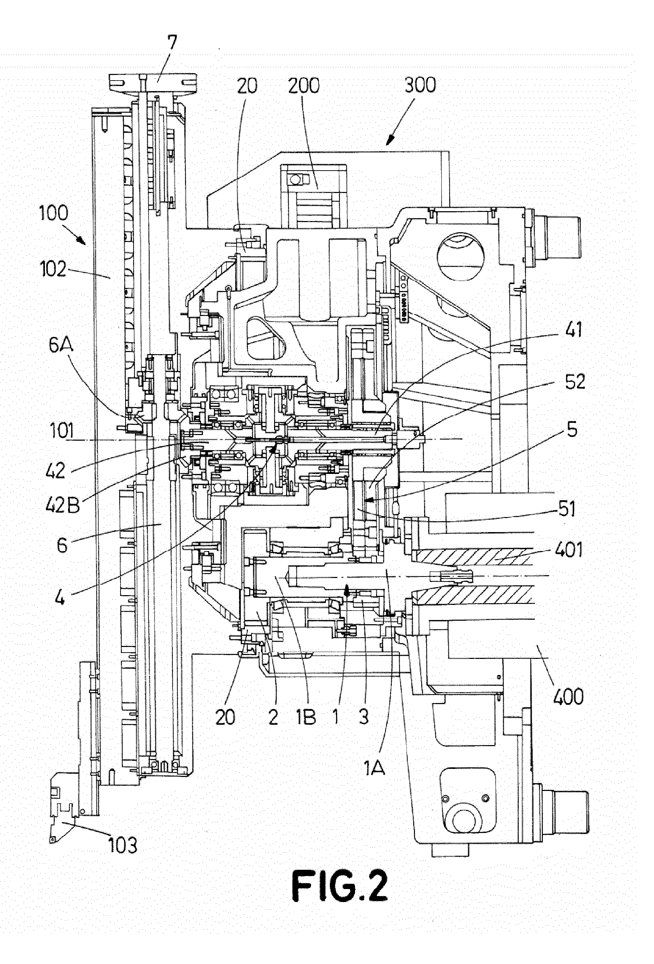

Figure 2 illustrates how the head is coupled to a ram 400 of a boring machine schematically, such that a drive shaft 1 of the head, housed inside the casing 300, is coupled to the rod 401 of the ram, such that when the rod of the boring machine rotates, the drive shaft 1 rotates as well, which can comprise two parts, 1 A and 1 B, attached to each other, to facilitate the mounting. As illustrated in figure 2, the drive shaft 1 comprises a first gear 2 and a second gear 3, arranged on the same axis but axially displaced from one another. The second gear engages, through the outer part, with a third gear 5 in the form of a toothed crown, and the first gear engages, through the inner part, with a fourth gear 20 in the form of a toothed crown, attached by means of screws to the tool holder 100. Thus, when the drive shaft 1 rotates, the first gear 2 rotates, a toothed wheel engaged with a toothed set in the inner surface of the crown 20, which produces the rotation of the tool holder 100 around its rotation axis 101. This is also illustrated schematically in figures 2-4.

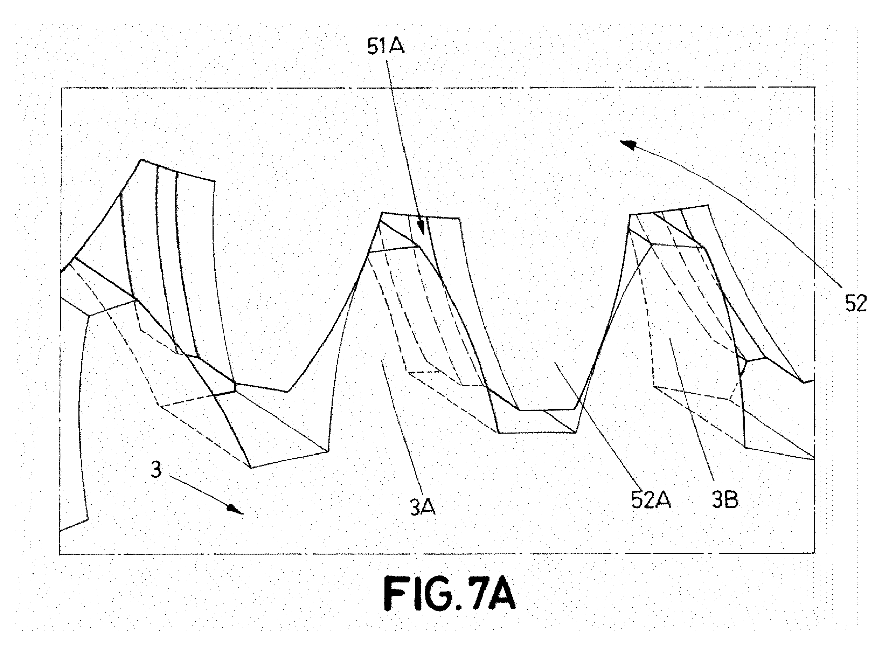

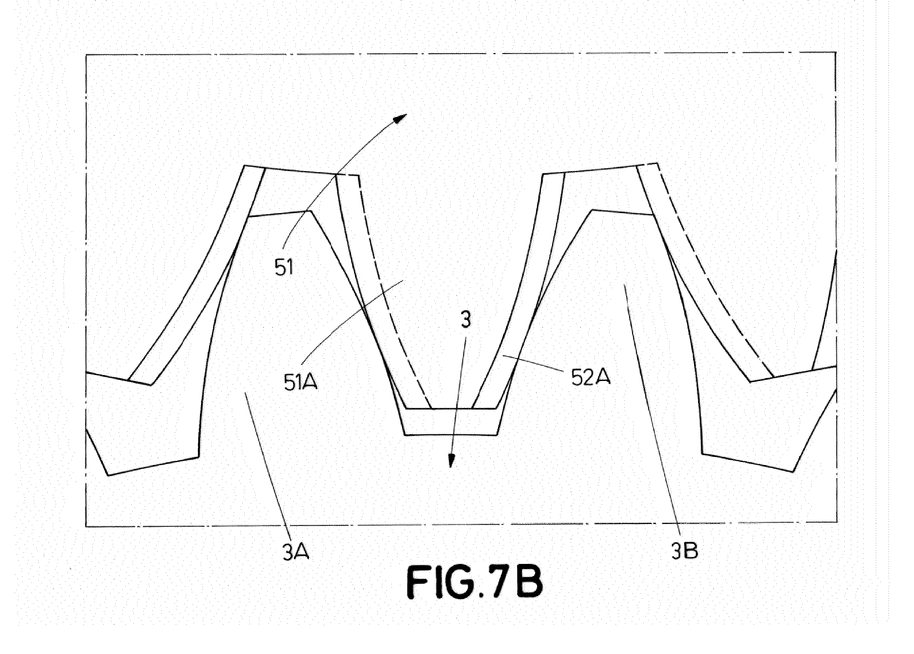

Figure 2 also shows how the second gear 3, a toothed wheel, engages with the third gear 5, which comprises the two toothed parts 51 and 52, which are connected to each other such that they share the rotation axis, the two toothed parts 51 and 52 being attached to each other such that the rotate together. The two toothed parts 51 and 52 are toothed parts angularly displaced from one another, such that the teeth 51 A of one of the toothed parts are slightly displaced with respect to the teeth 52B of the other of the toothed parts, as illustrated schematically in figures 7A and 7B, wherein it has been indicated that, due to this displacement, where the second gear 3 engages with the third gear 5, the gears 3 and 5 abut with one another in both directions of rotation, which reduces the spaces in the system and improves the precision of the machine. As shown in figures 7A and 7B, the two parts 51 and 52 exhibit toothed sets with substantially identical profiles, and are arranged such that when the third gear 5 engages with the second gear 3, a tooth 51 A of the first part 51 and a tooth 52A of the second part 52 meet between a pair of teeth 3A and 3B of the second gear 3, such that, due to the angular displacement, the tooth 51A of the first part 51 abuts with one of the teeth 3A of said pair of teeth, and the tooth 52B of the second part 52 abuts with the other of the teeth 3B of said pair of teeth. Thus, the spaces and tolerances of the system are reduced. When mounting the drive chain, the two toothed parts 51 and 52 may be angularly movable relative to each other, and when the drive chain is mounted, the two parts are angularly displaceable together until a tooth 51 A, 52B of each part 51, 52 abuts with a corresponding tooth 3A, 3B of the second gear, when said angular displacement is locked, for example, by means of a pin, bolts, nuts, or any other appropriate system. As the teeth of the gears are worn down due to the use of the head, the lock of the angular displacement can be released and the two parts 51 and 52 can rotate again with respect to the rotation axis of the third gear 5, and the angular movement can once again be locked when the two teeth 51 A, 52A of the two parts 51, 52 once again abut with the corresponding teeth 3A, 3B of the second gear 3. This way, the spaces and tolerances in the system can be kept at a minimum.

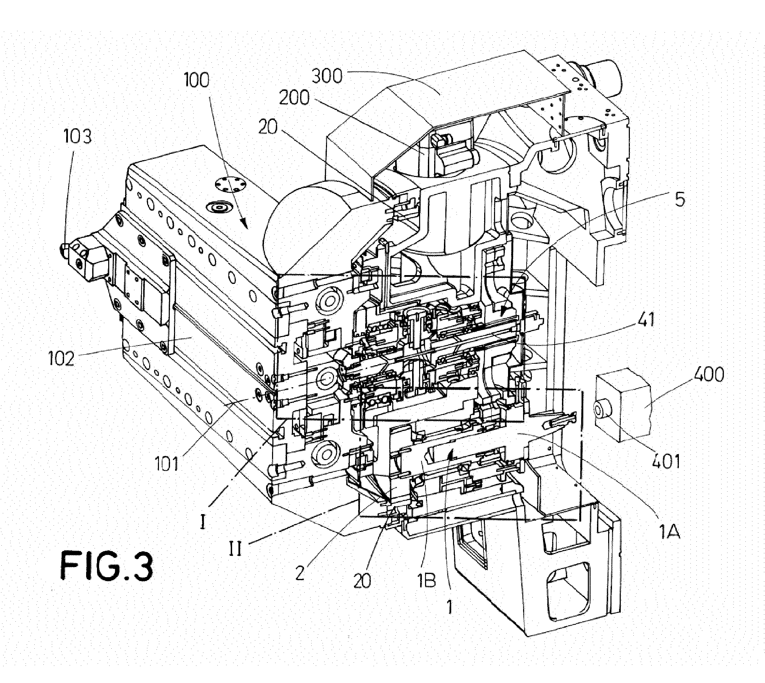

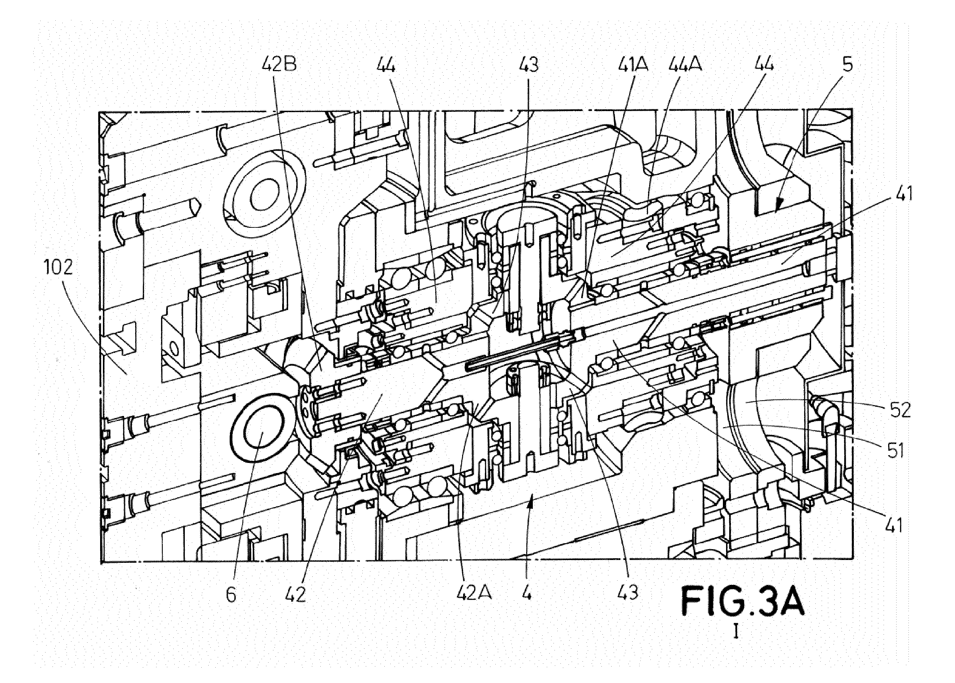

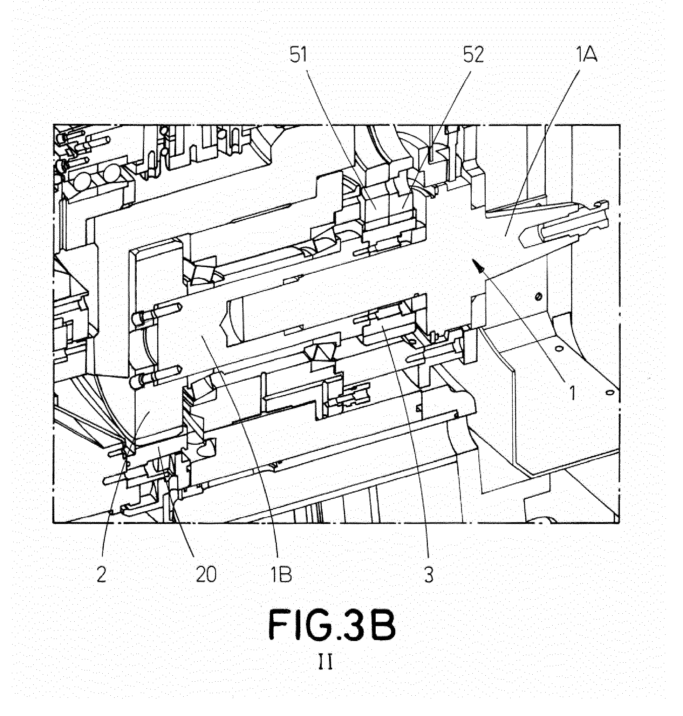

As shown in figures 2-4, the third gear 5 is attached to an input shaft 41 in a differential 4, which also exhibits an output shaft 42, the input shaft 41 being provided with a bevel gear 41 A (see figure 3) and the output shaft 42 being provided with another bevel gear (42A), these two bevel gears being coupled together by means of two differential bevel gears 43, as is usual in differentials. Thus, the input shaft 41 and the output shaft 42 will rotate in opposite directions.

The bevel gears are mounted in a differential support 44 which, when still, make the rotation speed of the input shaft 41 be the same as the rotation speed of the output shaft 42.

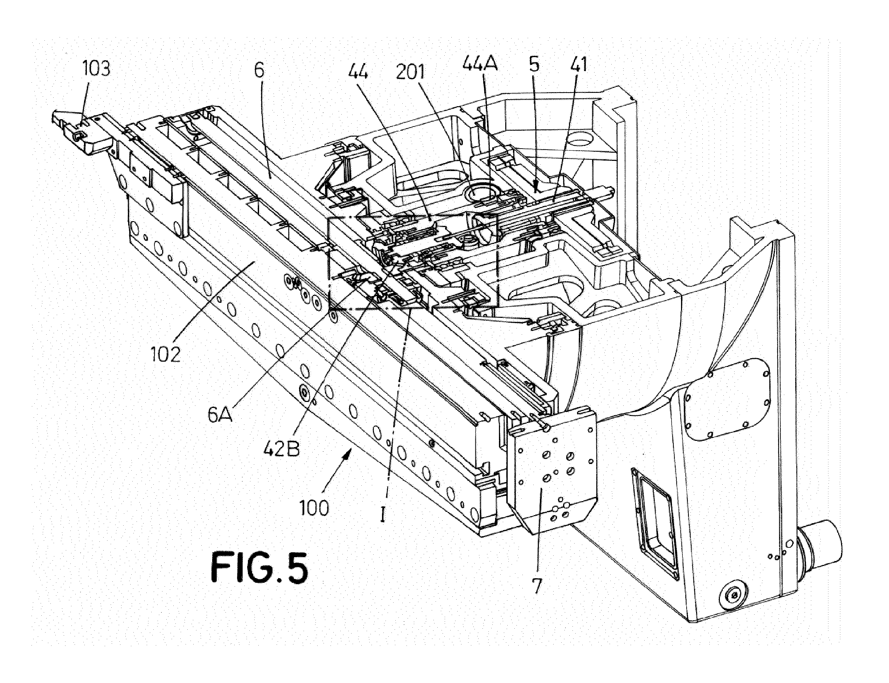

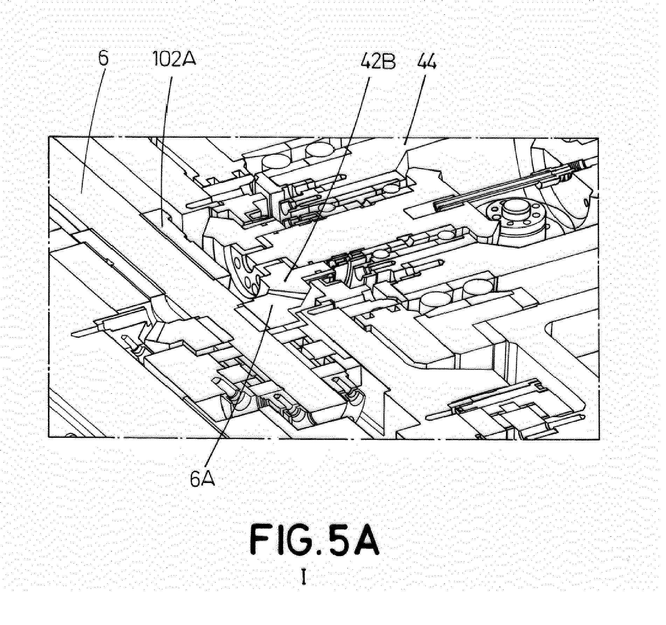

As shown in figures 1 and 5, the output shaft 42 is provided with a second bevel gear 42B which engages with a bevel gear 6A of a threaded spindle 6 arranged in the tool holder 100, such that if there is a difference between the rotation speed of the output shaft 42 and the rotation speed of the tool holder around its rotation axis 101, a rotation of the threaded spindle around its longitudinal axis is produced. The carriage 102 is coupled to the threaded spindle 6 by means of a nut 102A, such that when the spindle 6 rotates around its longitudinal axis, the carriage 103 will begin to be displaced in parallel to the spindle, that is to say, according to the axis 104, therefore displacing the tool 103 in the radial direction.

In this embodiment of the invention, the first gear is related to the tool holder 100, and the second gear 3 is related to the carriage such that when there is no difference in the rotation speed between the input shaft 41 and the output shaft 42 of the differential 4, the bevel gears 42B and 6A (see figures 2 and 5) rotate with the same speed and the spindle 6 does not rotate around its longitudinal axis, due to which the carriage 102 is not displaced radially. That is to say, in this case, when the drive shaft 1 rotates driven by the rod 401 of the boring machine, the first gear 2 rotates the crown 20 and the tool holder around the rotation axis 101 with the same rotation speed with which the second gear 3 rotates, through the drive chain described above, the second bevel gear 42B of the output shaft of the differential 4.

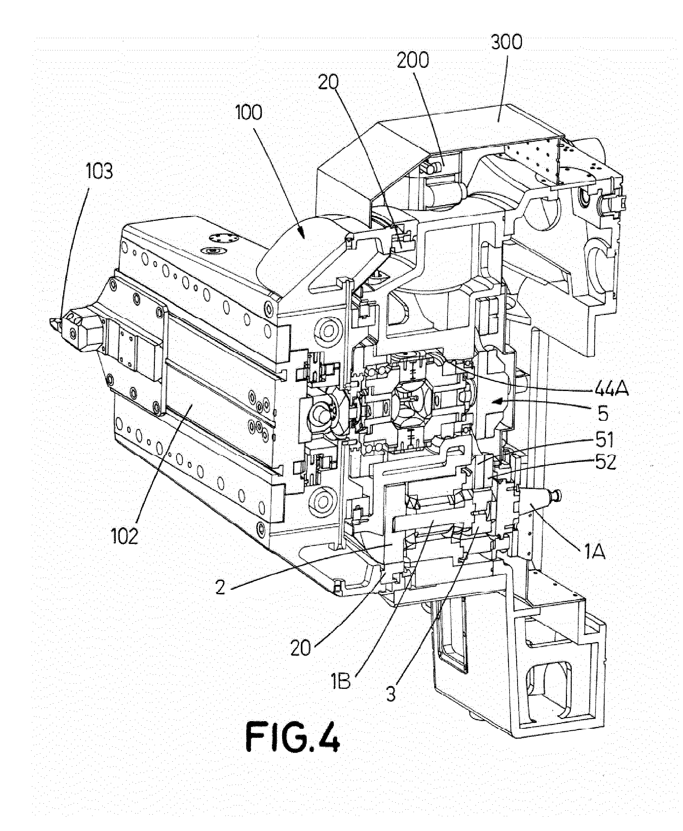

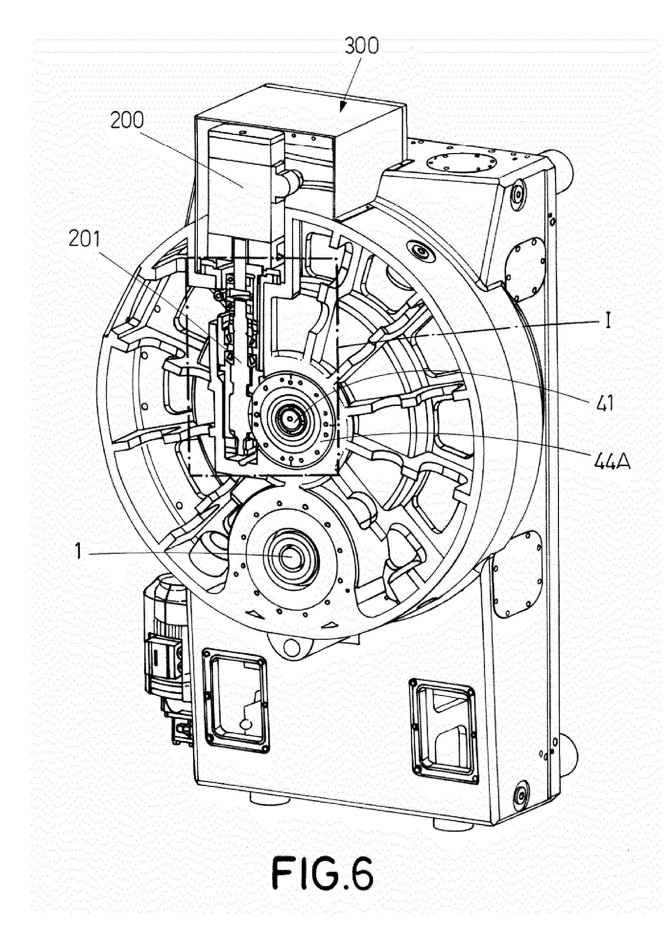

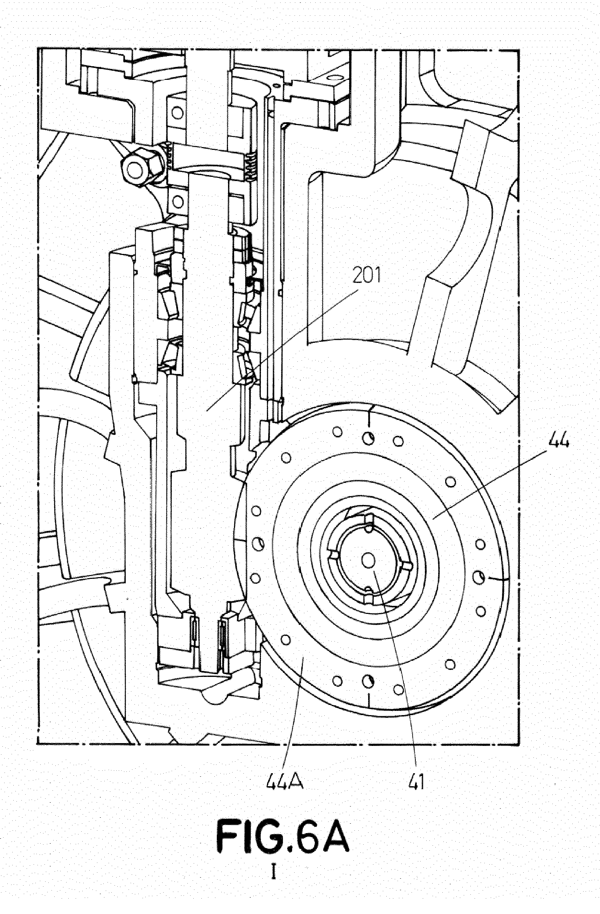

On the other hand, as shown in figures 1 and 4, inside the casing 300 there is a motor 300 provided with an endless screw or threaded spindle 201 (see figure 5), which engages with the crown 44A (see figures 3-6) of the differential support 44 where the two bevel gears 43 of the differential are housed. Therefore, the motor can rotate the support in one or the other direction (around the longitudinal axis defined by the input shaft 41 and the output shaft 42), such that the rotation speed of the output shaft 42 is different than the rotation speed of the input shaft 41. This difference means that the rotation of the output shaft 42 is no longer synchronized with the rotation speed of the tool holder 100 with the spindle 6, with which the output shaft 42, through the bevel gear 42A that engages with the bevel gear 6A of the spindle 6, causes the rotation of the spindle around its longitudinal axis, producing the displacement of the carriage 102 and with it the tool 103.

On the other hand, there is also a counterweight 7 arranged to be displaced in a synchronized manner with the carriage 102, that is to say, when the carriage is displaced outwards in the lateral direction, the same happens with the counterweight, in order to maintain a balance of forces with respect to the rotation axis.

In this text, the word "comprises" and its variants (such as "comprising", etc.) such not be interpreted in an excluding manner, that is to say, they do not exclude the possibility that what is described includes other elements, steps, etc.

On the other hand, the invention is not limited to the specific embodiments described herein, but also covers, for example, the variants that could be carried out by an average expert in the art (for example, in terms of the selection of materials, dimensions, components, configuration, etc.) within what is deduced from the claims.

## Claims

1. Boring and facing head, which comprises:
a drive shaft (1);
a tool holder (100) arranged to rotate around a rotation axis (101), the tool holder (100) comprising a carriage (102) configured to hold a tool (103), said carriage (102) being displaceable radially in a direction perpendicular to said rotation axis (101) to displace the tool (103) radially;
the drive shaft (1) comprising a first gear (2) arranged to rotate the tool holder (100) around said rotation axis (101) when the drive shaft (1) rotates;
the drive shaft (1) comprising a second gear (3) coupled to said carriage (102) through a drive chain, which includes a differential (4) with an input shaft (41) and an output shaft (42);
the head further comprising a motor (200), said motor (200) being arranged to act on the differential (4) to generate a difference in the rotation speed between the input shaft (41) and the output shaft (42) in order to displace the carriage (102) radially;
said drive chain comprising a third gear (5), which comprises a first toothed part (51) and a second toothed part (52) arranged on the same rotation axis, near each other, said first toothed part (51) being angularly displaced with respect to said second toothed part (52).

2. Boring and facing head according to claim 1, wherein said third gear (5) is a segmented gear that comprises said first toothed part (51) and said second toothed part (52), locked together, with said first toothed part (51) being angularly displaced with respect to the second toothed part (52) with an angle smaller than the angle between two consecutive teeth.

3. Head according to any one of the preceding claims, wherein said first toothed part (51) and said second toothed part (52) are arranged such that the angular displacement between them can be adjusted to adapt according to the wear of the gears.

4. Head according to any one of the preceding claims, wherein said differential (4) comprises a differential support (44) in which two differential gears (43) are housed, by means of which the input shaft (41) is coupled to the output shaft (42), such that the input shaft (41) and the output shaft (42) rotate in opposite directions, the motor (200) being coupled to said differential support (44) such that the motor can rotate the differential support (44) to produce said difference in the rotation speed between the input shaft (41) and the output shaft (42).

5. Head according to claim 4, wherein said differential gears (43) are bevel gears (43) that both engage with a bevel gear (41 A) of the input shaft (41) and with a bevel gear (42A) of the output shaft (42).

6. Head according to any one of the preceding claims, wherein said third gear (5) is attached to the input shaft (41) such that the rotation of said third gear (5) rotates said input shaft (41).

7. Head according to claim 6, wherein said second gear (3) engages with said third gear (5), such that the drive shaft (1) is arranged to rotate said input shaft (41) through said second gear (3) and said third gear (5).

8. Head according to any one of the preceding claims, wherein said third gear (5) is configured such that in a certain rotation position, a tooth (51 A) of the first toothed part (51) of said third gear (5) and a tooth (52A) of the second toothed part (52) of said third gear (5) are located between two adjacent teeth (3A, 3B) of said second gear (3), said tooth (51 A) of the first toothed part (51) abutting with one (3A) of said two teeth of the second gear (3), and said tooth (52A) of the second toothed part (52) abutting with the other (3B) of said two teeth (3A, 3B) of the second gear (3).

9. Head according to any one of the preceding claims, wherein said first gear (2) engages with a gear (20) attached to the tool holder (100), such that the rotation of the drive shaft (1) rotates the tool holder (100) around the rotation axis (101).

10. Head according to any one of the preceding claims, wherein the output shaft (42) engages with a threaded spindle (6) to which the carriage (102) is coupled, such that the rotation of the threaded spindle (6) around a longitudinal axis of the threaded spindle (6) generates a displacement, in the radial direction, of the carriage (102).

11. Head according to any one of the preceding claims, wherein
- the first gear (2) is related to the tool holder (100) and
- the second gear (3) is related to the carriage
such that when there is no difference between the rotation speed of the input shaft (41) and the output shaft (42), said carriage (102) is not displaced radially, and when there is a difference in the rotation speed between the input shaft (41) and the output shaft (42), said carriage (102) is displaced radially.

12. Head according to any one of the preceding claims, wherein the tool holder (100) further comprises a counterweight (7) arranged to be displaced radially in a synchronized manner with the carriage (102).

13. Boring machine that comprises a ram (400) with a rod (401), said rod (401) being attached to the drive shaft (1) of a head according to any one of the preceding claims, such that said rod can rotate said drive shaft.

14. Method of manufacturing a head according to any one of the claims 1-12, which comprises the steps of:
- mounting the third gear (5) such that it engages with said second gear (2), such that a tooth (51 A) of the first toothed part (51) of said third gear (5) and a tooth (52A) of the second toothed part (52) of said third gear (5) are located between two adjacent teeth (3A, 3B) of said second gear (3);
- displacing said first toothed part (51) and said second toothed (52) part angularly together, until said tooth (51 A) of the first toothed part (51) abuts with one (3A) of said two teeth of the second gear (3), and until said tooth (52A) of the second toothed part (52) abuts with the other (3B) of said two teeth (3A, 3B) of the second gear (3); and
- locking the first toothed part (51) and said second toothed part (52) together, in order to maintain an angular displacement selected between the first toothed part (51) and the second toothed part (52).
